# EUROPÄISCHE PATENTSCHRIFT

(11) **EP 2 000 690 B1**
(45) Veröffentlichungstag und Bekanntmachung des Hinweises auf die Patenterteilung: **02.12.2009**
(21) Anmeldenummer: 08010021.7
(22) Anmeldetag: 02.06.2008
(51) Int. Cl.: F16D 23/12

(54) **Ausrückvorrichtung**
Disengaging device
Dispositif de débrayage

(30) Priorität: 08.06.2007 DE 102007026660
(43) Veröffentlichungstag der Anmeldung: 10.12.2008
(73) Patentinhaber: LuK Lamellen und Kupplungsbau Beteiligungs KG, 77815 Bühl (DE)
(72) Erfinder: Dreher, Alexander, 76547 Sinzheim (DE); Reik, Wolfgang, Dr., 77815 Bühl (DE); Friedmann, Oswald, 77839 Lichtenau (DE); Mán, Lászlo Dr., 77833 Ottersweiler-Unzhurst (DE); Burkhart, Dirk, 76889 Klingenmünster (DE)

(56) Entgegenhaltungen:
- EP-A- 1 734 274
- EP-A- 1 887 241

## Beschreibung

Die vorliegende Erfindung betrifft eine Ausrückvorrichtung zur Betätigung einer Kupplung, insbesondere einer Kupplung im Antriebsstrang eines Kraftfahrzeuges zwischen Antriebsmotor und Schaltgetriebe nach dem Oberbegriff des Anspruchs 1.

Eine derartige Ausrückvorrichtung wird auch als Wipphebelaktor bezeichnet. Ein gattungsbildender Wipphebelaktor ist beispielsweise aus der DE 10 2004 009 832 und aus EP 1 734 274 bekannt.

Des Weiteren sind hubgesteuerte selbstnachstellende Kupplungen bekannt, deren Nachstellung bei Überschreiten eines bestimmten Ausrückweges ausgelöst wird. Die Kennlinien derartiger Kupplungen streuen stark, sodass es hier zu großen Aktorlasten bis zur Auslösung der Selbstnachstellung kommen kann.

Eine Aufgabe der vorliegenden Erfindung ist es daher, die Aktorlasten durch die Kennlinienstreuung der Kupplung aufgrund von Verschleiß und Toleranz zu verringern.

Dieses Problem wird gelöst durch eine Ausrückvorrichtung zur Betätigung einer Kupplung, insbesondere einer Kupplung im Antriebsstrang eines Kraftfahrzeuges zwischen Antriebsmotor und Schaltgetriebe, umfassend einen Ausrückhebel, der sich mit einem Innenlager an einem Ausrücklager und mit einem Außenlager an einer Feder abstützt, wobei das Außenlager um einen Federweg in Wirkrichtung der Feder verschiebbar ist, und sich zwischen Außen-und Innenlager an einem in axialer Richtung festgelegten und in radialer Richtung verschiebbaren Lagerbock, der mittels einer motorisch angetriebenen Spindel radial um einen Verschiebeweg verschiebbar ist, an einem Drehpunkt abstützt, und das Innenlager um einen Ausrückweg verschiebbar ist, wobei ein Endanschlag eine Endstellung des Ausrückweges in einer ausgekuppelten Stellung vorgibt, wobei der Endanschlag mindestens eine vordere und eine hintere Anschlagstellung besitzt, die jeweils unterschiedliche Endstellungen des Ausrückweges in der ausgekuppelten Stellung bewirken, wobei ein Schaltmittel dem Weg des Ausrückhebel an einer Kontaktstelle zwischen Ausrückhebel und Schaltmittel zumindest bereichsweise folgt und ein Wechsel der Anschlagstellungen erfolgt, wenn ein Schaltweg des Schaltmittels überschritten wird. Eine der Endstellungen wird so gewählt, dass der Ausrückhub der Kupplung zwischen dem vollständig ausgekuppelten und dem vollständig eingekuppelten Zustand für die Auslösung der Selbstnachstellung nicht ausreicht, die andere Endstellung wird so gewählt, dass der Ausrückhub der Kupplung zwischen dem vollständig ausgekuppelten und dem vollständig eingekuppelten Zustand für die Auslösung der Selbstnachstellung ausreicht. Je nach Wahl der Endstellung wird also das Nachstellen der Kupplung ausgelöst oder unterbleibt. Durch Wahl der Endstellung kann das Nachstellen der Kupplung somit ausgelöst werden. Die Auslösung der Selbstnachstellung der Kupplung, die an sich auf dem Weg zwischen der geschlossenen und der geöffneten Stellung basiert, wird durch die erfindungsgemäße Vorrichtung ausgelöst, sobald die Kupplung bei einer aktiv zu schließenden Kupplung in der zugedrückten Stellung einen Maximalweg überschreitet. Vorzugsweise ist vorgesehen, dass der Endanschlag nach Auslösen der Nachstellung der Kupplung wieder in die vordere Anschlagstellung gebracht wird. Bei der vorderen Anschlagstellung reicht der Kupplungsweg nicht aus, um das Selbstnachstellen der Kupplung auszulösen, in der hinteren Anschlagstellung reicht der Kupplungsweg zwischen der hinteren Anschlagstellung und der vollständig zugedrückten Kupplung aus, um das Nachstellen der Kupplung auszulösen.

Das Schaltmittel ist vorzugsweise in axialer Richtung der Kupplung verschiebbar. Vorzugsweise ist weiter vorgesehen, dass das Schaltmittel in dessen vorderer und hinterer Anschlagstellung als Endanschlag wirkt. Das Schaltmittel ist also vorzugsweise Teil des Endanschlags, wobei der mit dem Ausrückhebel in Verbindung stehende Teil des Endanschlags und der mit dem Ausrückhebel in Verbindung stehende Teil des Schaltmittels das gleiche Bauteil sind, dieses Bauteil hat also die doppelte Funktion des Endanschlags und ist gleichzeitig Schaltmittel.

Der Endanschlag umfasst vorzugsweise eine Druckhülse und eine Schalthülse, die gemeinsam in einem Gehäuse angeordnet sind, wobei die Schalthülse bei einer axialen Bewegung durch die Druckhülse in mindestens einer ersten Drehstellung bis in die vordere Anschlagstellung und in mindestens einer zweiten Drehstellung bis in die hintere Anschlagstellung verschiebbar ist. Erste und zweite Drehstellung können mehrfach aufeinander folgen, also abwechselnd erste Drehstellung, zweite Drehstellung, erste Drehstellung und so fort. Die verschiedenen Drehstellungen der Schalthülse lassen also unterschiedlich weite axiale Verschiebungen der Schalthülse bzw. der Druckhülse zu. Ein Verdrehen der Schalthülse erfolgt dabei vorzugsweise bei Überschreiten eines vorgegebenen Maximalwegs in Richtung der zugedrückten Kupplung.

Vorzugsweise ist vorgesehen, dass die Schalthülse und das Gehäuse mindestens je eine miteinander in Wirkverbindung stehende Steuerkante und die Schalthülse und die Druckhülse je eine miteinander in Wirkverbindung stehende Verzahnung aufweisen, wobei die Steuerkanten axial schräg verlaufende Flächen sind und die Verzahnungen dreieckförmige Querschnittsflächen haben, wobei die Steuerkante der Schalthülse in axial verlaufende Nute zwischen den Steuerkanten des Gehäuses eingreifen kann und die axiale Länge der Steuerkanten des Gehäuses wechselweise einen ersten und zweiten Wert hat. Die schräg verlaufenden Flächen der Steuerkanten und die Verzahnungen sind so gegeneinander verschoben, dass bei Überschreiben eines Maximalwegs eine Rotationsbewegung der Schalthülse bewirkt wird. Dadurch schaltet die Schalthülse zwischen den beiden möglichen axialen Wegen um, die jeweils unterschiedliche Endanschläge bewirken.

Die axiale Bewegung der Schalthülse erfolgt bevorzugt gegen die Kraft einer Feder. Die Kraft der Feder drückt die Schalthülse vorzugsweise in Richtung des Schalthebels, so dass die Schalthülse und der Ausrückhebel dauerhaft in Kontakt bleiben. In Richtung der zugedrückten Kupplung kann der Kontakt zwischen Druckhülse und Schalthebel bei Überschreiten des für die Umschaltung zwischen den beiden Endanschlägen notwendigen Wegs verloren gehen, da hier ein Nachfolgen der Druckhülse gegenüber dem Ausrückhebel nicht mehr erforderlich ist.

Vorzugsweise ist vorgesehen, dass der Endanschlag eine Druckhülse, eine Steuerkantenhülse und eine Schalthülse umfasst, die gemeinsam in einem Gehäuse angeordnet sind, wobei die Schalthülse bei einer axialen Bewegung durch die Druckhülse in mindestens einer ersten Drehstellung bis in die vordere Anschlagstellung und in mindestens einer zweiten Drehstellung bis in die hintere Anschlagstellung verschiebbar ist und die Steuerkantenhülse gegen die Kraft einer Feder axial verschieblich angeordnet ist. Auch hier können erste und zweite Drehstellung mehrfach aufeinander folgen, also abwechselnd erste Drehstellung, zweite Drehstellung, erste Drehstellung und so fort.

Die Schalthülse und die Steuerkantenhülse weisen bevorzugt mindestens je eine miteinander in Wirkverbindung stehende Steuerkante und die Schalthülse und die Druckhülse je eine miteinander in Wirkverbindung stehende Verzahnung auf, wobei die Steuerkanten axial schräg verlaufende Flächen sind und die Verzahnungen dreieckförmige Querschnittsflächen haben, wobei die Steuerkante der Schalthülse in axial verlaufende Nute zwischen den Steuerkanten der Steuerkantenhülse eingreifen kann und die axiale Höhe der Steuerkanten der Steuerkantenhülse wechselweise einen ersten und zweiten Wert hat.

Die Bewegung der Schalthülse erfolgt bevorzugt gegen die Kraft einer ersten Feder und die Bewegung der Steuerkantenhülse gegen die Kraft einer zweiten Feder. Die Federkonstante der zweiten Feder ist bevorzugt größer als die Federkonstante der ersten Feder. Sollte die Schalthülse gegenüber der Steuerkantenhülse verklemmt sein, beispielsweise in Form eines so genannten Kantenträgers, wenn also zwei Flächen der Steuerkanten so aufeinander stehen, dass eine Verdrehung in eine Position, die eine Verschiebung der beiden in axialer Richtung gegeneinander erlaubt, behindert wird, so kann eine Bewegung gegen die Kraft der zweiten Feder erfolgen, wodurch die Steuerkantenhülse selbst axial verschoben wird. Zur Berücksichtigung von Fertigungstoleranzen und Reibverhältnissen des gesamten Kupplungsbetätigungsmechanismus kann bei geschlossener Kupplung ein Sperren in Richtung öffnender Kupplung verursacht werden. Beim Schließen der Kupplung wandert die Schalthülse die Steuerkante des Gehäuses entlang bis an das Ende der Steuerkante. Bei Überschreiben der Kante aller Schaltzähne der Schalthülse werden die Schalthülse und die Verzahnung der Schalthülse einrasten und somit die Grundlage für ein Nachstellen der Kupplung bilden. Tritt hier aber der Fall auf, dass beim Öffnen der Kupplung der Schaltzahn oder die Schaltzähne der Schalthülse die gehäusefeste Steuerkante nicht eindeutig überschreiten oder nicht in die definierte Ausgangslage zurückkehren, so liegt ein Kantenträger oder bei Verwendung mehrerer Schaltzähne auch ein Verkeilen der Zähne gegenüber den gehäusefesten Steuerkanten vor. Durch die Fertigungstoleranzen und Reibverhältnisse kann dieser Fall nicht ausgeschlossen werden. Um trotzdem stets ein Öffnen der Kupplung zu gewährleisten, auch wenn ein Kantenträger oder Ähnliches den Mechanismus behindert, ist ein weiterer Freiheitsgrad der Steuerkanten in Richtung Kupplung öffnen durch die verschiebbare Steuerkantenhülse gegeben. Die Anschlagpositionen bleiben weiterhin im Gehäuse erhalten. In Richtung Kupplung öffnen kann die Steuerkantenhülse bei Überlast ausweichen und ein Öffnen der Kupplung ist gewährleistet. Die Vorspannkraft der auf die Steuerhülse wirkenden Außenfeder ist dabei stets größer als wie in Folge der einleitenden Öffnungskraft entstehende Rückschaltkraft im Mechanismus, somit weicht die Steuerkantenhülse nur bei Überlast aus.

Im Folgenden werden Ausführungsbeispiele der Erfindung anhand der beiliegenden Zeichnungen erläutert. Dabei zeigen:
Fig. 1 ein Diagramm eines Einrückweges einer Kupplung im Antriebsstrang eines Fahrzeuges über der Einrückkraft;
Fig. 2 eine Prinzipdarstellung eines ersten Ausführungsbeispiels eines erfindungsgemäßen Wipphebelaktors in einer ersten Stellung;
Fig. 3 eine Prinzipdarstellung Ausführungsbeispiels gemäß Fig. 2 in einer zweiten Stellung;
Fig. 4 eine Prinzipdarstellung des Ausführungsbeispiels gemäß Fig. 2 in einer dritten Stellung;
Fig. 5a ein erstes Ausführungsbeispiel eines Endanschlags in einer Explosionsdarstellung;
Fig. 5b das Ausführungsbeispiel gemäß Fig. 5a im Schnitt;
Fig. 6a) - 6h) den Endanschlag gemäß Fig. 5 in einer Abwicklung;
Fig. 7a) - 7h) ein zweites Ausführungsbeispiel eines Endanschlags in einer Abwicklung;
Fig. 8 eine alternative Ausführungsform des Endanschlages gemäß Fig. 5;
Fig. 9a) bis Fig. 9c) Abwicklungen der Vorrichtung nach Fig. 8.

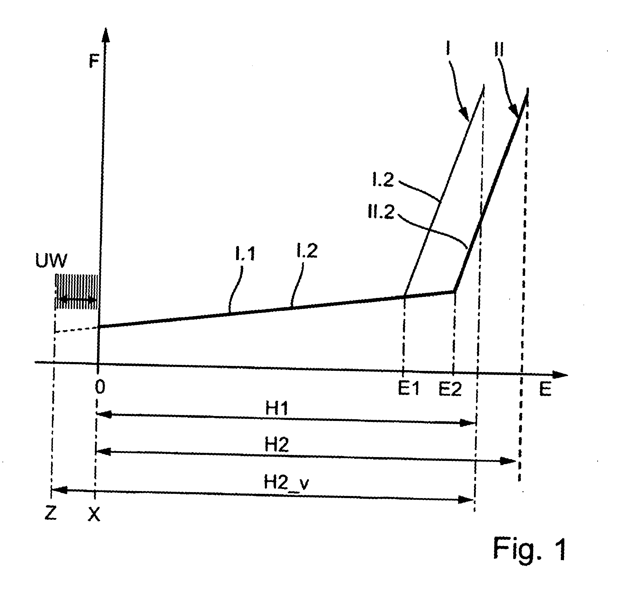

Fig. 1 zeigt ein Diagramm eines Einrückweges E, aufgetragen über der Ordinate, über der Einrückkraft F, aufgetragen über der Abszisse einer Kupplung im Antriebsstrang eines Fahrzeuges. Eine Kurve I gibt die Kupplungskennlinie bei einer Kupplung ohne Verschleiß wieder. Diese beginnt bei einem Einrückweg E = 0 und einer Einrückkraft F = 0, steigt als Kurve I.1 linear an, um zum Ende des Kupplungseinrückweges ab einem Wert E1 sprungartig in einen Ast I.2 zu einem größeren Gradienten überzugehen. Bei einer verschlissenen Kupplung wird diese Kennlinie entlang des Astes I.1 zu einem Wert E2 verschoben, dies ist durch die Kennlinie II mit den Ästen II.1 und II.2 dargestellt.

Die Verschleißnachstellung der Kupplung, es handelt sich hier z.B. um eine Schneckenradkupplung erfolgt bei einem definierten Hub der Kupplung. Bei der Kupplungskennlinie ohne Verschleiß I reicht der Hub H1 zwischen geöffneter und geschlossener Kupplung nicht aus, um die Verschleißnachstellung zu aktivieren. Bei der Kupplungskennlinie II einer verschlissenen Kupplung reicht der Hub H2 hingegen aus, um die Verschleißnachstellung zu aktivieren.

Die Verschleißnachstellung kann allerdings auch aktiviert werden, indem der Hub ausgehend von einer nicht verschlissenen Kupplung, mithin der Kupplungskennlinie 1, aktiv erhöht wird. Dies kann zum Beispiel durch einen Überweg UW bei geöffneter Kupplung erfolgen. Durch den initiierten Überweg UW bei geöffneter Kupplung, dieser ist als UW in Fig. 1 dargestellt, kann der Nachstellhub der Kupplung verschoben werden. Somit verändert sich die Zungenposition in Einbaulage bei geöffneter Kupplung je nach initiiertem Überweg UW. Bei schließender Kupplung wird die Nachstellposition erreicht bei dem Hub H2_v. Dadurch wird ein Nachstellen der Kupplung ausgelöst. Der initiierte Überweg UW wird insbesondere bei Hebelaktoren gemäß der vorliegenden Erfindung durch einen verschiebbaren Endanschlag des Aktors realisiert. Voraussetzung ist, dass die Kupplung den Aktor stets bis an den variablen Endanschlag drückt, das heißt die Kupplungskraft ist bezogen auf den Endanschlag stets größer als die Aktorkraft oder der Aktor drückt sich selbständig in diese Position.

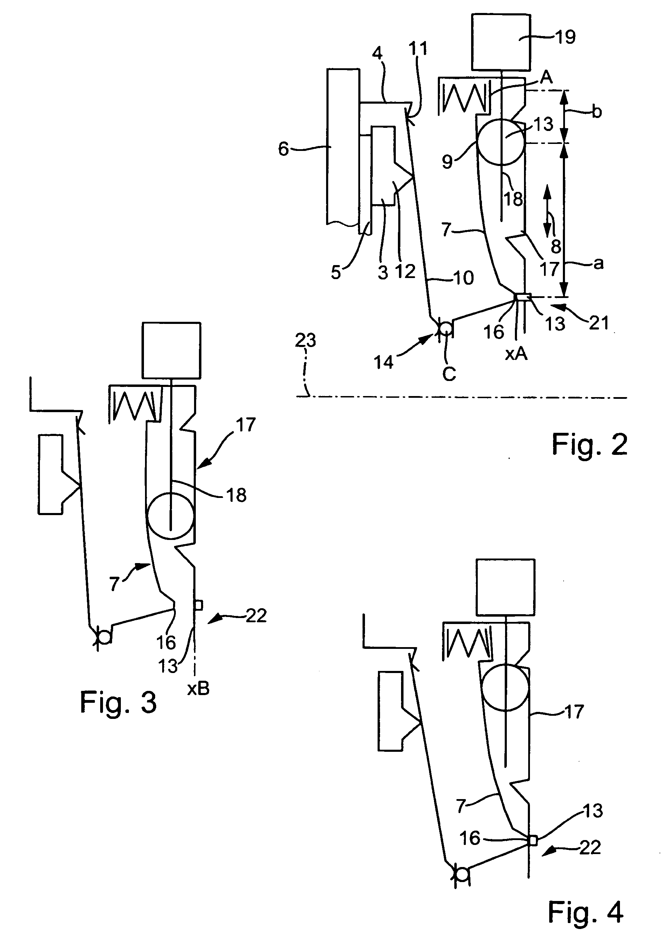

Die Figuren 2 bis 4 zeigen eine Prinzipdarstellung eines ersten Ausführungsbeispiels einer erfindungsgemäßen Ausrückvorrichtung, eines so genannten Wipphebelaktors. Anhand Fig. 2 wird der prinzipielle Aufbau des Ausführungsbeispiels der erfindungsgemäßen Ausrückvorrichtung erläutert. Obwohl die meisten der Einzelteile bzw. Baugruppen rotationssymmetrisch zu einer Drehachse R einer hier nicht näher dargestellten Kurbelwelle bzw. Getriebeeingangswelle sind, wurde auf diese Darstellung der Übersichtlichkeit halber bewusst verzichtet.

Eine Kupplung 2 umfasst im Wesentlichen eine Druckplatte 3, eine Gegendruckplatte 6 sowie eine zwischen Druckplatte 3 und Gegendruckplatte 6 angeordnete Kupplungsscheibe 5. Die Kupplungsscheibe 5 ist mit der hier nicht dargestellten Getriebeeingangswelle drehfest verbunden, die Gegendruckplatte 6 ist mit der hier nicht dargestellten Kurbelwelle verbunden und die Druckplatte 3 ist mit der Gegendruckplatte 6 axial in Richtung der Drehachse verschiebbar, jedoch gegenüber der Gegendruckplatte 6 drehfest, gelagert. Durch Aufdrücken der Druckplatte 3 auf die Gegendruckplatte 6 wird die Kupplungsscheibe 5 zwischen beiden eingeklemmt, so dass durch die auftretende (trockene) Reibung ein Drehmoment zwischen Gegendruckplatte 6 und Kupplungsscheibe 5 übertragen werden kann.

An der Gegendruckplatte 6 ist ein Kupplungsdeckel 4 angeordnet, welcher eine radial nach innen gerichtete Andruckscheibe 11 aufweist. An dieser stützt sich eine Tellerfeder 10 ab, die sich des Weiteren an einem Druckring 12 der Druckplatte 3 abstützt. Wird der radial innere Bereich der Tellerfeder 10 zum Beispiel mit einem hier schematisch dargestellten Ausrücklager 14, in der Darstellung der Figuren 2 bis 4, nach links gedrückt, so wird die Druckplatte 3 gegen die Gegendruckplatte 6 gedrückt, so dass die Kupplung geschlossen wird und ein Drehmoment zwischen Gegendruckplatte 6 und Kupplungsscheibe 5 übertragen werden kann. Es handelt sich hier also um eine aktiv zugedrückte Kupplung.

Im Folgenden soll die Wirkungsweise der Ausrückvorrichtung beschrieben werden. Diese dient dazu, mittels des Ausrücklagers 14 die Tellerfeder 10 zwischen einer ausgekuppelten Stellung und einer eingekuppelten Stellung zu bewegen. Die ausgekuppelte Stellung ist in Fig. 2, die eingekuppelte Stellung in Fig. 3 dargestellt. Die Betätigung des Ausrücklagers 14 erfolgt mit einem Ausrückhebel 7. Der Ausrückhebel 7 stützt sich mit einem Innenlager C an dem Ausrücklager 14 ab und an einem Außenlager A an der Feder 9. Beide Lagerstellen sind hier nur schematisch angedeutet, es handelt sich hier um Lager, die den Ausrückhebel in radialer Richtung sowie in Umfangsrichtung festlegen. Die Tellerfeder 10 übt auf das Ausrücklager 14 eine in der Darstellung der Figuren 2 bis 4 nach rechts gerichtete Kraft aus, die Feder 9 übt auf das Außenlager A ebenfalls eine nach rechts gerichtete Kraft aus. Um an dem Innenlager C eine in der Darstellung der Fig. 2 nach links gerichtete Kraft auf das Ausrücklager 14 auszuüben, ist nun ein Gegenlager B zwischen dem Innenlager C und dem Außenlager A angeordnet, so dass der Ausrückhebel 7 nach Art einer Wippe betätigt werden kann. Das Gegenlager B ist radial verschiebbar angeordnet. Das Gegenlager B wird gebildet von einem schematisch dargestellten Lagerbock 15 mit Rollen, auf denen sich der Ausrückhebel 7 abstützt, sowie Rollen, mit denen sich der Lagerbock 15 an einer Kupplungs- bzw. getriebegehäusefest angeordneten Abstützung 17 abstützt. Der Lagerbock 15 umfasst eine Gewindebohrung, in die eine Spindel 18, die durch einen Elektromotor 19 gedreht werden kann, eingreift und so einen Aktor zur Betätigung der Kupplung bildet. Durch Drehen der Spindel 18 kann der Lagerbock 15 in -bezogen auf die Kupplungsachse radialer- Richtung des Doppelpfeils 8 verschoben werden.

Der Gesamtabstand zwischen innerer Lagerstelle C und äußerer Lagerstelle A wird durch die Stellung des Gegenlagers B aufgeteilt in einen der Feder 9 zugeordneten Hebelarm b und einen dem Ausrücklager 14 zugeordneten Hebelarm a. Das Verhältnis der auf das Ausrücklager 14 ausgeübten Kraft zu der Federkraft 9 entspricht dem Verhältnis der beiden Hebelarme b gegenüber b nach bekannten Hebelgesetzen. Je weiter der Gegenlagerpunkt B von dem Außenlager A verrückt wird, desto geringer wird die auf das Ausrücklager 14 ausgeübte Kraft.

Ein Endanschlag 13 begrenzt den Einrückweg E der Kupplung bzw. des Ausrücklagers 14. In der vollständig geöffneten Stellung der Kupplung, wie diese beispielsweise in Fig. 1 dargestellt ist, liegt eine Anschlagfläche 16 des Ausrückhebels 7 an dem Endanschlag 13 an. Der Endanschlag 13 stützt sich gehäusefest ab, beispielsweise an der Abstützung 17. Der Endanschlag 13 kann nun aus der in Fig. 1 dargestellten ersten Position 21, bei der die Anschlagfläche 16 in der geöffneten Kupplungsstellung bei dem Weg E=X an dem Endanschlag anliegt, in eine zweite Stellung 22 verschoben werden, bei die Anschlagfläche 16 den Endanschlag 13 bei einem Weg E=Z berührt, so dass der Ausrückhebel 7 einen größeren Weg in Richtung der Kupplungsöffnung zurücklegen kann, dies ist in Fig. 2 dargestellt. Bei der Position des Endanschlags 13 gemäß der Darstellung der Fig. 2 wird der initiierte Überweg UW =X-Z gemäß Fig. 1 ermöglicht, dies ist in Fig. 3 dargestellt. Wird die Kupplung nun ausgehend von der Fig. 3 geschlossen, so reicht der Hub zur Auslösung der Verschleißnachstellung aus. Bei teilweise oder vollständig geschlossener Kupplung wird der Endanschlag wieder in die erste Position 21, wie diese in Fig. 1 dargestellt ist, zurückgeschoben. Durch Verschieben des Endanschlags 13 in die zweite Position 22 gemäß Fig. 2 und 3 wird eine Verschleißnachstellung ausgelöst, da durch den initiierten Überweg UW der Hub zur Auslösung der Verschleißnachstellung H2 beim Schließen der Kupplung erreicht werden kann.

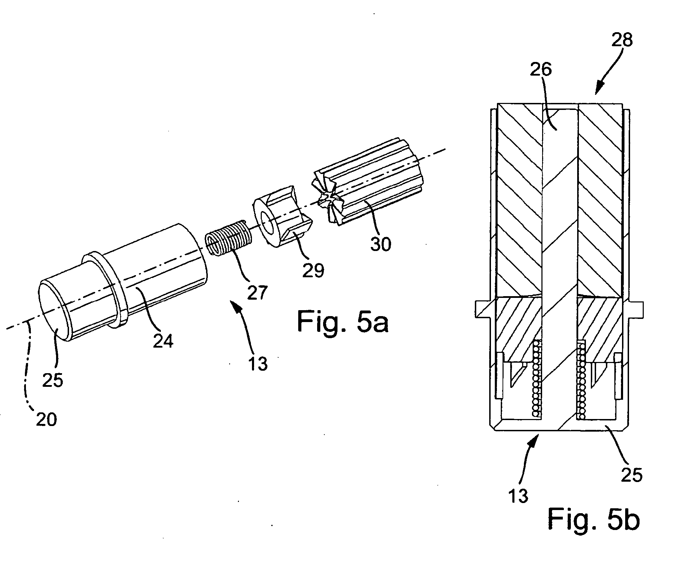

Der Endanschlag 13 ist dazu zweistufig schaltbar ausgelegt, ähnlich der Verschiebung einer Kugelschreibermine. Fig. 5a zeigt ein Ausführungsbeispiel eines derartigen Endanschlags 13 in einer Explosionsdarstellung, Fig. 5b zeigt den Endanschlag im Schnitt. Der Endanschlag 13 ist so angeordnet, dass dessen Längsachse 20 in etwa parallel zur Kupplungsachse 23 ist. Der Endanschlag 13 umfasst ein Gehäuse 24, das hohlzylindrisch ausgebildet ist und an einer Seite durch einen Boden 25 abgeschlossen ist, an einer anderen Seite geöffnet ist. Von dem Boden 25 ragt innerhalb des hohlzylindrischen Bereichs des Gehäuses 24 ein Stift 26 in Richtung des geöffneten Bereichs. Über den Stift 26 ist eine Feder 27 geschoben, an die sich in Richtung der Öffnung 28 eine Schalthülse 29 und eine Druckhülse 30 anschließt. Die Druckhülse 30 ragt aus der Öffnung 28 heraus. Gegen die Kraft Feder 27 können Schalthülse 29 und Druckhülse 30 entlang des Stiftes 26 bewegt werden, wobei die Schalthülse 29 und die Druckhülse 30 bis in eine erste bzw. zweite Stellung 21, 22 in Richtung des Bodens gedrückt werden können. die Schalthülse 29 nimmt wechselweise eine von zwei Drehstellungen A bzw. B ein, zu denen unterschiedliche untere Stellungen, nämlich eine vordere Anschlagstellung X und eine hintere Anschlagstellung Z gehören. Wird in Richtung des Weges E eine obere Grenze, als Schaltweg Y bezeichnet, überschritten, so dreht die Schalthülse in die benachbarte Stellung, also von A nach B oder von B nach A, sodass die untere Stellung von X auf Z bzw. Z nach X wechselt. Die Druckhülse 30 wird durch die Feder 27 in Richtung des Ausrückhebels 7 gedrückt und ist in einem Kontaktpunkt immer mit diesem in Kontakt, folgt also dessen Bewegung. In Richtung der zugedrückten Kupplung kann hier auch eine Wegbegrenzung der Druckhülse 30 vorgesehen sein, sodass diese den Kontakt zum Ausrückhebel 7 verliert.

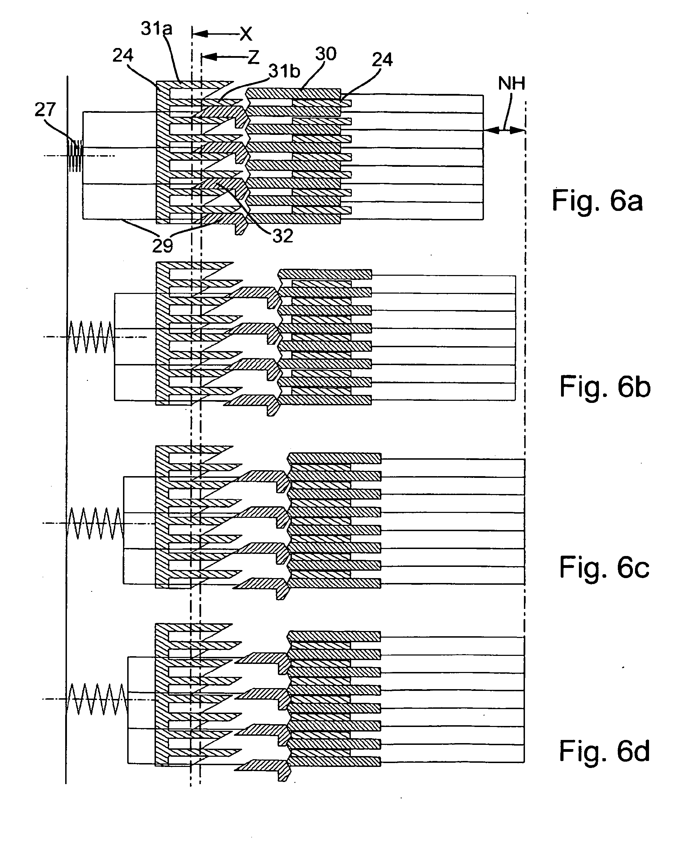

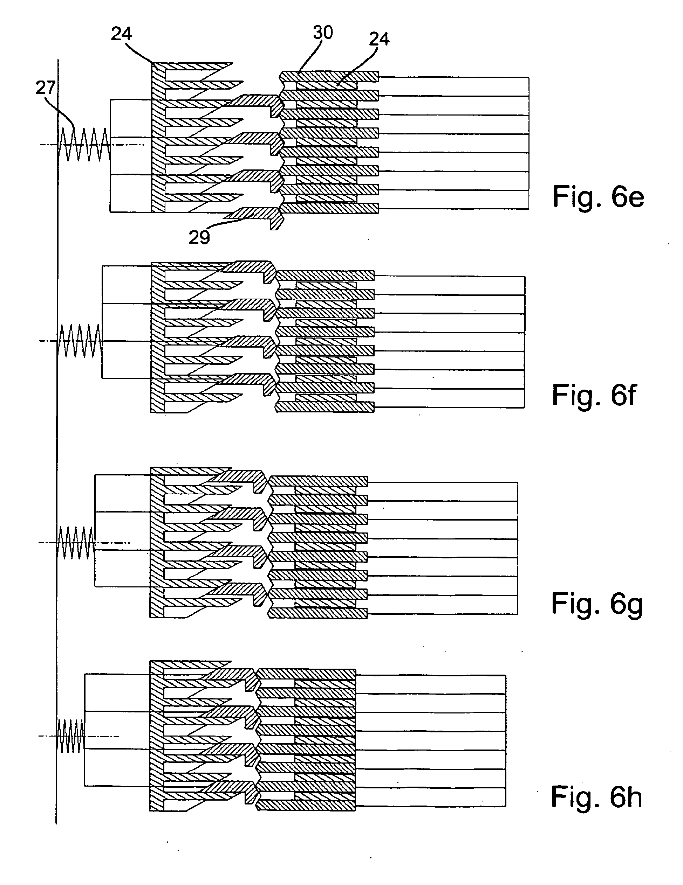

Fig. 6 a) bis h) zeigen in einer Abwicklung die Funktionsweise des zweistufigen Endanschlags 13. Das Gehäuse 24 umfasst an seiner Innenseite gehäusefeste Steuerkanten 31 a und 31 b. Die Schalthülse 29 umfasst Steuerkanten 32, die mit den gehäuseseitigen Steuerkanten 31a, 31 b zusammenwirken. Beide Steuerkanten 31 a, 31 b, 32 weisen jeweils Schrägen 43, 44 auf, die die gleiche Orientierung haben. An der der Druckhülse 30 zugewandten Seite weist die Schalthülse eine in der Abwicklung dreiecksförmige Verzahnung 33 auf, die mit einer in der Abwicklung ebenfalls dreiecksförmigen Verzahnung 34 der Druckhülse 30 zusammenwirkt. Die Steuerkanten haben abwechselnd eine axiale Länge L1 und eine axiale Länge L2. In der Ausgangsposition drückt die Druckhülse 30 die Schalthülse 29 in die Anschlagsposition X der gehäusefesten Steuerkante. Wird die Druckhülse entgegen der Anschlagsposition bewegt, so wird die Schalthülse 29 in Folge der Federkraft der Feder 27 ebenfalls mit verschoben. Die Schalthülse wandert dabei die Steuerkanten 31 des Gehäuses 24 entlang bis an das Ende der Steuerkante, dies ist in Fig. 6c dargestellt. Bei Überschreiten dieser verdreht sich die Schalthülse 29 so, dass deren Verzahnung 33 in die Verzahnung 34 der Druckhülse einrastet, dies ist in Fig. 6d dargestellt. Dieser Fall tritt bei Überschreiten eines vordefinierten Einrückweges auf. Der Einrastpunkt sollte so gewählt werden, dass der Klickhub der Kupplung stets größer ist als der Sensierhub des Mechanismus des Endanschlags. Wird die Druckhülse 30 wieder in Richtung der Anschlagsposition X gedrückt, so kommt es zu einer Verdrehung der Schalthülse aufgrund der richtungsgebenden Steuerkante am Gehäuse, dies ist in den Fig. 6e, f und g dargestellt. Dabei wandert die Schalthülse entlang der Verzahnung aus der Rastposition heraus. Der Verzahnungswinkel der Druckhülse sollte vorzugsweise kleiner dem Winkel der gehäusefesten Steuerkante sein. Bei Überschreiten des Verzahnungshochpunktes wandert die Druckhülse 30 an der Gegenflanke der Verzahnung in Richtung der Anschlagsposition Z. Bei Erreichen dieser steht die Druckhülse 4 um einen Nachstellhub NH=Z-X höher als in der Anschlagsposition X. Dieser Höhenunterschied entspricht dem initiierten Überweg UW, der zum Erreichen des Klickhubes bzw. Nachstellhubes der Kupplung notwendig ist. Durch unterschiedliche Steuerkanten ist es möglich, dass der Einrastpunkt bei unterschiedlichen Einrückwegen erreicht wird. Vorzugsweise wird der erste Einrastpunkt so positioniert, dass der Klickhub der Kupplung stets größer ist als der Sensierhub des zuvor dargestellten Mechanismus. Der zweite Einrastpunkt wird so positioniert, dass bei erneutem Betätigen der Kupplung deutlich vor dem anderen Einrastpunkt erreicht wird.

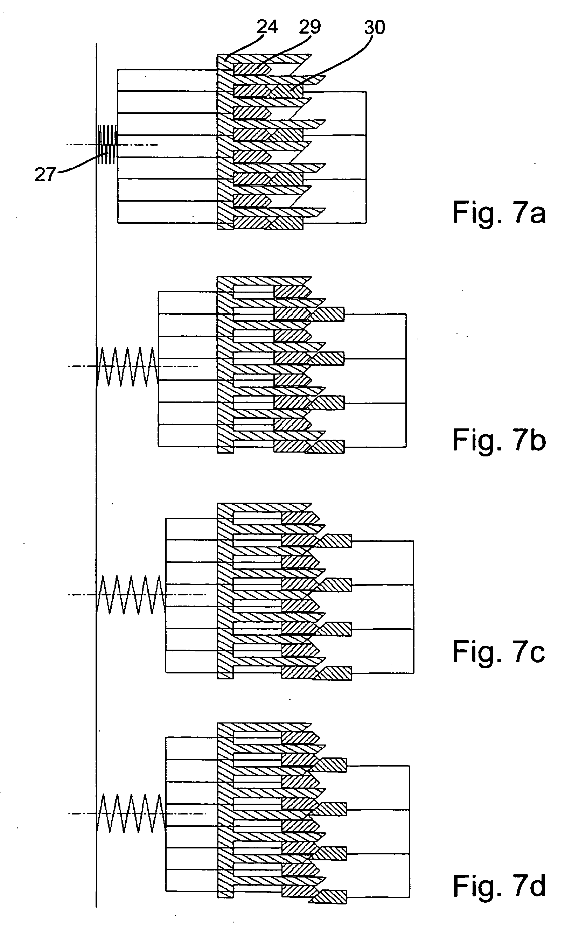

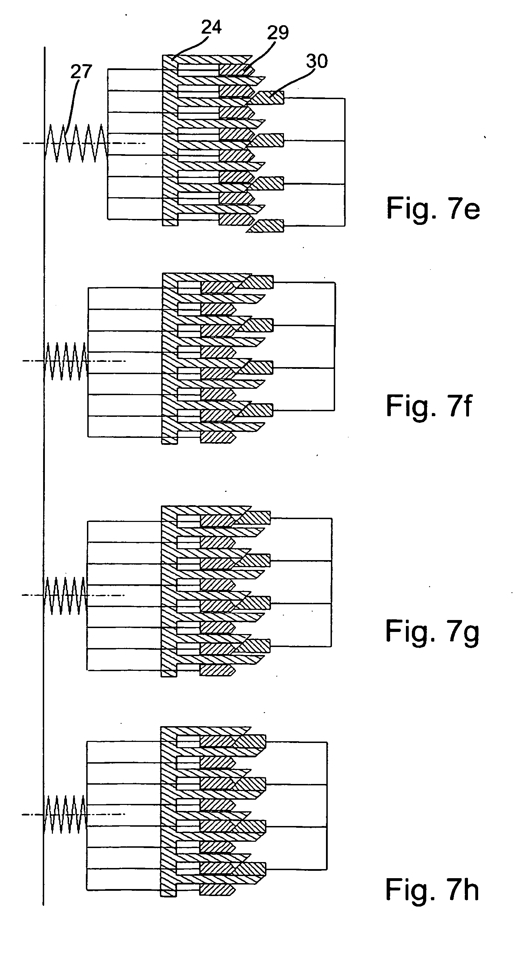

In Fig. 7 ist eine Abwicklung wie in Fig. 6 für ein zweites Ausführungsbeispiel dargestellt. Unterschiedlich zu dem zuvor anhand der Fig. 6 dargestellten Ausführungsbeispiel sind die Anordnung der Druck- und Schalthülsen. Die Schalthülse 29 im zweiten Ausführungsbeispiel besitzt nur eine Verzahnung, bei der die Verzahnungswinkel aller Bauteile im Einrastpunkt gleichgerichtet sind. Diese kann sowohl mit der Verzahnung der Druckhülse 30 als auch mit der Verzahnung des Gehäuses 24 im Eingriff sein. Zum Erreichen des Einrastpunktes schiebt die Druckhülse 30 mit ihrer Zahnflanke die Schalthülse 28 entlang der gehäuseseitigen Steuerkante 31. Bei Überschreiten des Schaltwegs erfolgt die Verdrehung der Schalthülse 29, dabei rastet die Verzahnung der Schalthülse 29 in die Verzahnung der Druckhülse 30 komplett ein. Wird der Mechanismus in Anschlagposition zurückgefahren, so verdreht sich die Schalthülse 29 weiter in Folge der Steigung der gehäusefesten Steuerkante 31 und wandert die Gegenflanke der Druckhülsenverzahnung hoch. Bei Erreichen des Hochpunktes der Druckhülsenverzahnung drückt die Schalthülse weiter in Folge der steigenden Steuerkante und erreicht bei weiterem Zurückfahren die Anschlagposition.

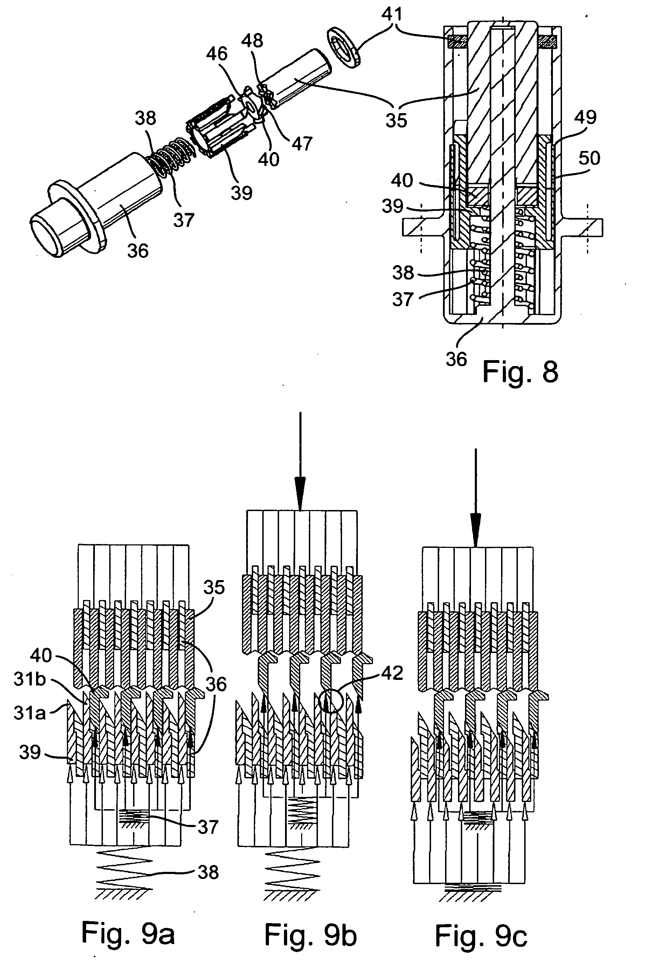

Fig. 8 zeigt ein alternatives Ausführungsbeispiel des Endanschlages. Um stets ein Öffnen der Kupplung zu gewährleisten, auch wenn ein Kantenträger oder ähnliches im Mechanismus auftritt, ist ein Freiheitsgrad der Steuerkanten in Richtung Kupplung öffnen notwendig. Dazu wird eine zusätzliche Steuerkantenhülse 39, auf der die Steuerkanten angeordnet sind, verwendet. Die Anschlagspositionen bleiben weiterhin im festen Gehäuse erhalten. Diese Steuerkantenhülse 39 ist in einem Gehäuse 36 axial geführt und federbelastet durch eine Außenfeder 37, die sich wiederum gehäuseseitig abstützt, gegen einen festen Anschlag im Gehäuse 36 in Richtung Kupplung schließen gedrückt. Das Gehäuse 36 umfasst an seiner Innenseite die gehäusefeste Steuerkanten 31 a und 31 b. In Richtung Kupplung öffnen kann die Steuerkantenhülse 39 bei Überlast ausweichen und ein Öffnen der Kupplung ist gewährleistet. Die Vorspannkraft einer auf die Steuerhülse wirkende Außenfeder 37 ist dabei stets größer als die infolge der einleitenden Öffnungskraft entstehenden Rückstellkraft im Mechanismus d.h. nur bei Überlast weicht die Steuerkantenhülse 39 aus. Da der Mechanismus auf den Überweg UW der Kupplung reagiert ist bei weiterem Überweg der Kupplung z.B. durch Verschleiß gewährleistet, dass der Schaltzahn oder die Schaltzähne der Schalthülse 40 die gehäusefeste Steuerkante wieder eindeutig überschreiten und somit die Grundlage bilden für die Nachstellung in der Kupplung.

Fig. 9a) bis Fig. 9c) zeigen eine Abwicklung der Vorrichtung nach Fig. 8 zur Verdeutlichung des Schaltvorganges. In Fig. 9b) ist ein so genannter Kantenträger mit Bezugszeichen 42 bezeichnet. Bei einem Kantenträger stehen zwei Steuerkanten direkt aufeinander. Die Druckhülse 35 ist vorzugsweise in dem Gehäuse 36 über einen in das Gehäuse eingearbeiteten nicht zylindrischen Steg, aus Gründen der benötigen Verdrehsicherung bzw. Positionierung der Druckhülse, axial geführt, zentriert und verdrehgesichert. Auf das angeschlossene Ende 45 der Druckhülse 35 wirkt in axialer Richtung entgegen der Federkraft einer Innenfeder 38 die Betriebskraft, die den Mechanismus betätigt. Die Schalthülse 40 ist vorzugsweise durch einen Steg 46 im Gehäuse 36 zentriert. Weiterhin wird die Schalthülse 40 vorzugsweise über eine Verzahnung 47 sowie eine Verzahnung 48 der Druckhülse 35 und/oder die Steuerkanten der Steuerkantenhülse 39 sowie durch die Federbelastung der Innenfeder 38 in axialer Richtung und Umfangrichtung positioniert. Die Steuerkantenhülse 39 ist vorzugsweise im Gehäuse 36 durch in Gehäusenuten 49 eingreifende blattfederartige Stege 50, die bei Montage der Steuerkantenhülse 39 in die Gehäusenuten einschnappen, in eine axiale Richtung federvorgespannt geklemmt und gegenüber dem Gehäuse 36 verdrehgesichert und in die andere Richtung mittels der Außenfeder 37, die sich einerseits an der Steuerkantenhülse 4 und andererseits am Gehäuse 36 abstützt, federbelastet. Die Außenfeder 37 und die Innenfeder 38 werden vorzugsweise als Schraubenfedern ausgebildet. Die Außenfeder 37 wird an einem Ende durch das Gehäuse 36 und am anderen Ende an der Steuerkantenhülse 39 zentriert. Die Innenfeder 38 wird durch den mittigen Gehäusesteg zentriert. Über dem am Gehäuse 36 angebrachten Bund kann der gesamte Mechanismus axial in der Anwendung positioniert und z. B. mittels Bajonettverschluss oder durch Fügen fixiert werden. Die Zentrierung in der Anwendung kann vorzugsweise über den unteren Gehäuseteil erfolgen. Vorzugsweise wird der Mechanismus durch eine Dichtung 41, die dem Stand der Technik entspricht, abgedichtet.

### Bezugszeichenliste

- A: äußere Lagerstelle
- B: Drehpunkt
- C: Innenlager
- S: Verschiebeweg
- Lf: Federweg
- 2: Kupplung
- 3: Druckplatte
- 4: Kupplungsdeckel
- 5: Kupplungsscheibe
- 6: Gegendruckplatte
- 7: Ausrückhebel
- 8: Doppelpfeil
- 9: Feder
- 10: Tellerfeder
- 11: Andruckscheibe
- 12: Druckring
- 13: Endanschlag
- 14: Ausrücklager
- 15: Lagerbock
- 16: Anschlagfläche
- 17: Abstützung
- 18: Spindel
- 19: Elektromotor
- 20: Längsachse
- 21: Erste Anschlagstellung
- 22: Zweite Anschlagstellung
- 23: Längsachse
- 24: Gehäuse
- 25: Boden
- 26: Stift
- 27: Feder
- 28: Öffnung
- 29: Schalthülse
- 30: Druckhülse
- 31 a, 31 b: Gehäuseseitige Steuerkanten
- 32: Steuerkanten
- 33: Verzahnung Schalthülse
- 34: Verzahnung Druckhülse
- 35: Druckhülse
- 36: Gehäuse
- 37: Außenfeder
- 38: Innenfeder
- 39: Steuerkantenhülse
- 40: Schalthülse
- 41: Dichtung
- 42: Kantenträger
- 43: Schräge
- 44: Schräge
- 45: Ende
- 46: Steg
- 47: Verzahnung
- 48: Verzahnung
- 49: Gehäusenut
- 50: Steg

## Patentansprüche

1. Ausrückvorrichtung zur Betätigung einer Kupplung, insbesondere einer Kupplung im Antriebsstrang eines Kraftfahrzeuges zwischen Antriebsmotor und Schaltgetriebe, umfassend einen Ausrückhebel (7), der sich mit einem Innenlager (C) an einem Ausrücklager (14) und mit einem Außenlager (A) an einer Feder (9) abstützt, wobei das Außenlager (A) um einen Federweg (LF) in Wirkrichtung der Feder (9) verschiebbar ist, und sich zwischen Außen-und Innenlager (A, C) an einem in axialer Richtung festgelegten und in radialer Richtung verschiebbaren Lagerbock (15), der mittels einer motorisch (19) angetriebenen Spindel (18) radial um einen Verschiebeweg (S) verschiebbar ist, an einem Drehpunkt (B) abstützt, und das Innenlager (C) um einen Ausrückweg verschiebbar ist, wobei ein Endanschlag (13) eine Endstellung des Ausrückweges in einer ausgekuppelten Stellung vorgibt, **dadurch gekennzeichnet, dass** der Endanschlag (13) mindestens eine vordere und eine hintere Anschlagstellung (21, 22) besitzt, die jeweils unterschiedliche Endstellungen (X, Z) des Ausrückweges in der ausgekuppelten Stellung bewirken, wobei ein Schaltmittel (30, 35) dem Weg des Ausrückhebels (7) an einer Kontaktstelle zwischen Ausrückhebel (7) und Schaltmittel (30, 35) zumindest bereichsweise folgt und ein Wechsel der Anschlagstellungen (21, 22) erfolgt, wenn ein Schaltweg (Y) des Schaltmittels (30) überschritten wird.

2. Ausrückvorrichtung nach Anspruch 1, **dadurch gekennzeichnet, dass** das Schaltmittel (30, 35) in axialer Richtung der Kupplung verschiebbar ist.

3. Ausrückvorrichtung nach Anspruch 2, **dadurch gekennzeichnet, dass** das Schaltmittel (30, 35) in dessen vorderer und hinterer Anschlagstellung (21, 22) als Endanschlag (13) wirkt.

4. Ausrückvorrichtung nach einem der vorhergehenden Ansprüche, **dadurch gekennzeichnet, dass** der Endanschlag (13) eine Druckhülse (30, 35) und eine Schalthülse (29, 40) umfasst, die gemeinsam in einem Gehäuse (24, 36) angeordnet sind, wobei die Schalthülse (29, 40) bei einer axialen Bewegung durch die Druckhülse (30, 35) in mindestens einer ersten Drehstellung bis in die vordere Anschlagstellung (X) und in mindestens einer zweiten Drehstellung bis in die hintere Anschlagstellung (Y) verschiebbar ist.

5. Ausrückvorrichtung nach einem der vorhergehenden Ansprüche, **dadurch gekennzeichnet, dass** die Schalthülse (29, 40) und das Gehäuse (24, 36) mindestens je eine miteinander in Wirkverbindung stehende Steuerkante (31a, 31 b) und die Schalthülse (29, 40) und die Druckhülse (30, 35) je eine miteinander in Wirkverbindung stehende Verzahnung (33, 34, 37, 48) aufweisen, wobei die Steuerkanten axial schräg verlaufende Flächen (43, 44) sind und die Verzahnungen (33, 34, 37, 48) dreieckförmige Querschnittsflächen haben, wobei die Steuerkante der Schalthülse in axial verlaufende Nute (49) zwischen den Steuerkanten (31a, 31 b) des Gehäuses (24, 36) eingreifen kann und die axiale Länge der Steuerkanten (31 a, 31 b) des Gehäuses (24, 36) wechselweise einen ersten und zweiten Wert (L1, L2) hat.

6. Ausrückvorrichtung nach Anspruch 1, **dadurch gekennzeichnet, dass** die axiale Bewegung der Schalthülse (29, 40) gegen die Kraft einer Feder (27) erfolgt.

7. Ausrückvorrichtung nach einem der vorhergehenden Ansprüche, **dadurch gekennzeichnet, dass** der Endanschlag (13) eine Druckhülse (35), eine Steuerkantenhülse (39) und eine Schalthülse (40) umfasst, die gemeinsam in einem Gehäuse (36) angeordnet sind, wobei die Schalthülse (40) bei einer axialen Bewegung durch die Druckhülse (35) in mindestens einer ersten Drehstellung bis in die vordere Anschlagstellung (X) und in mindestens einer zweiten Drehstellung bis in die hintere Anschlagstellung (Y) verschiebbar ist und die Steuerkantenhülse (39) gegen die Kraft einer Feder (37) axial verschieblich angeordnet ist.

8. Ausrückvorrichtung nach Anspruch 7, **dadurch gekennzeichnet, dass** die Schalthülse (40) und die Steuerkantenhülse (39) mindestens je eine miteinander in Wirkverbindung stehende Steuerkante und die Schalthülse und die Druckhülse je eine miteinander in Wirkverbindung stehende Verzahnung (47, 48) aufweisen, wobei die Steuerkanten axial schräg verlaufende Flächen sind und die Verzahnungen (47, 48) dreieckförmige Querschnittsflächen haben, wobei die Steuerkante, (31 a, 31 b) der Schalthülse (40) in axial verlaufende Nute zwischen den Steuerkanten der Steuerkantenhülse (39) eingreifen können und die axiale Länge (L1, L2) der Steuerkanten (31 a, 31 b) der Steuerkantenhülse (39) wechselweise einen ersten und zweiten Wert hat.

9. Ausrückvorrichtung nach Anspruch 7 oder 8, **dadurch gekennzeichnet, dass** die Bewegung der Schalthülse (40) gegen die Kraft einer ersten Feder (38) und die Bewegung der Steuerkantenhülse (39) gegen die Kraft einer zweiten Feder (37) erfolgt.

10. Ausrückvorrichtung nach Anspruch 9, **dadurch gekennzeichnet, dass** die Federkonstante der zweiten Feder (37) größer ist als die Federkonstante der ersten Feder (38).

## Claims

1. Disengaging device for actuating a clutch, in particular a clutch in the drive train of a motor vehicle between a drive engine and a gearbox, comprising a disengaging lever (7) which is supported with an inner bearing (C) on a disengaging bearing (14) and with an outer bearing (A) on a spring (9), with the outer bearing (A) being movable by a spring travel (LF) in the direction of action of the spring (9) and being supported between the outer and inner bearings (A, C) on a bearing block (15), which is fixed in the axial direction and is movable in the radial direction and can be moved radially by a movement travel (S) by means of a spindle (18) which is driven by a motor (19), at a centre of rotation (B), and with the inner bearing (C) being movable by a disengaging travel, with an end stop (13) defining an end position of the disengaging travel in a decoupled position, **characterized in that** the end stop (13) has at least one front and one rear stop position (21, 22) which in each case form different end positions (X, Z) of the disengaging travel in the decoupled position, with a shift means (30, 35) following the travel of the disengaging lever (7) at a contact point between the disengaging lever (7) and shift means (30, 35) at least in regions, and with a change in the stop positions (21, 22) taking place if a shift travel (Y) of the shift means (30) is exceeded.

2. Disengaging device according to Claim 1, **characterized in that** the shift means (30, 35) is movable in the axial direction of the clutch.

3. Disengaging device according to Claim 2, **characterized in that** the shift means (30, 35) acts as an end stop (13) when in its front and rear stop positions (21, 22).

4. Disengaging device according to one of the preceding claims, **characterized in that** the end stop (13) comprises a pressure sleeve (30, 35) and a shift sleeve (29, 40) which are arranged together in a housing (24, 36), wherein, in the event of an axial movement by the pressure sleeve (30, 35), the shift sleeve (29, 40) can be moved into the front stop position (X) when in at least one first rotary position and can be moved into the rear stop position (Y) when in at least one second rotary position.

5. Disengaging device according to one of the preceding claims, **characterized in that** the shift sleeve (29, 40) and the housing (24, 36) have at least in each case one control edge (31a, 31b), which control edges are operatively connected to one another, and the shift sleeve (29, 40) and the pressure sleeve (30, 35) have in each case one toothing (33, 34, 47, 48), which toothings are operatively connected to one another, with the control edges being axially obliquely running surfaces (43, 44) and with the toothings (33, 34, 47, 48) having triangular cross-sectional areas, with it being possible for the control edge of the shift sleeve to engage into axially running grooves (49) between the control edges (31a, 31b) of the housing (24, 36), and with the control edges (31a, 31b) of the housing (24, 36) alternately having first and second values (L1, L2) of axial length.

6. Disengaging device according to Claim 1, **characterized in that** the axial movement of the shift sleeve (29, 40) takes place counter to the force of a spring (27).

7. Disengaging device according to one of the preceding claims, **characterized in that** the end stop (13) comprises a pressure sleeve (35), a control edge sleeve (39) and a shift sleeve (40) which are arranged together in a housing (36), wherein, in the event of an axial movement by the pressure sleeve (35), the shift sleeve (40) can be moved into the front stop position (X) when in at least one first rotary position and can be moved into the rear stop position (Y) when in at least one second rotary position, and with the control edge sleeve (39) being arranged so as to be axially movable counter to the force of a spring (37).

8. Disengaging device according to Claim 7, **characterized in that** the shift sleeve (40) and the control edge sleeve (39) have at least in each case one control edge, which control edges are operatively connected to one another, and the shift sleeve and the pressure sleeve have in each case one toothing (47, 48), which toothings are operatively connected to one another, with the control edges being axially obliquely running surfaces and with the toothings (47, 48) having triangular cross-sectional areas, with it being possible for the control edges (31a, 31b) of the shift sleeve (40) to engage into axially running grooves between the control edges of the control edge sleeve (39), and with the control edges (31a, 31b) of the control edge sleeve (39) alternately having first and second values of axial length (L1, L2).

9. Disengaging device according to Claim 7 or 8, **characterized in that** the movement of the shift sleeve (40) takes place counter to the force of a first spring (38) and the movement of the control edge sleeve (39) takes place counter to the force of a second spring (37).

10. Disengaging device according to Claim 9, **characterized in that** the spring constant of the second spring (37) is greater than the spring constant of the first spring (38).

## Revendications

1. Dispositif de débrayage pour la commande d'un embrayage, en particulier un embrayage dans une chaîne de transmission d'un véhicule automobile entre le moteur d'entraînement et la boîte de vitesses, comprenant un levier de débrayage (7) qui s'appuie avec un palier interne (C) contre un palier de débrayage (14) et avec un palier externe (A) contre un ressort (9), le palier externe (A) pouvant être déplacé dans la direction d'action du ressort (9) d'une course de ressort (LF), s'appuyant sur un pivot (B) entre le palier externe et le palier interne (A, C) sur un coussinet (15) fixé en direction axiale et déplaçable dans la direction radiale, qui peut être déplacé radialement d'une course de déplacement (S) au moyen d'une broche (18) entraînée par un moteur (19), et le palier interne (C) pouvant être déplacé d'une course de débrayage, une butée de fin de course (13) prédéfinissant une position de fin de course de la course de débrayage dans une position débrayée, **caractérisé en ce que** la butée de fin de course (13) possède au moins une position de butée avant et une position de butée arrière (21, 22), qui donnent des positions de fin de course chacune différentes (X, Z) de la course de débrayage dans la position débrayée, un moyen de sélection (30, 35) suivant la course du levier de débrayage (7) au niveau d'un point de contact entre le levier de débrayage (7) et le moyen de sélection (30, 35) au moins en partie, et un changement entre les positions de butée (21, 22) ayant lieu lorsqu'une course de sélection (Y) du moyen de sélection (30) est dépassée.

2. Dispositif de débrayage selon la revendication 1, **caractérisé en ce que** le moyen de sélection (30, 35) peut être déplacé dans la direction axiale de l'embrayage.

3. Dispositif de débrayage selon la revendication 2, **caractérisé en ce que** le moyen de sélection (30, 35) agit dans ses positions de butée avant et arrière (21, 22) en tant que butée de fin de course (13).

4. Dispositif de débrayage selon l'une quelconque des revendications précédentes, **caractérisé en ce que** la butée de fin de course (13) comprend une douille de pression (30, 35) et une douille de sélection (29, 40), qui sont disposées ensemble dans un boîtier (24, 36), la douille de sélection (29, 40) pouvant être déplacée, lors d'un déplacement axial à travers la douille de pression (30, 35), dans au moins une première position de rotation jusque dans la position de butée avant (X) et dans au moins une deuxième position de rotation jusque dans la position de butée arrière (Y).

5. Dispositif de débrayage selon l'une quelconque des revendications précédentes, **caractérisé en ce que** la douille de sélection (29, 40) et le boîtier (24, 36) présentent au moins à chaque fois une arête de commande (31a, 31b) en liaison fonctionnelle mutuelle et la douille de sélection (29, 40) et la douille de pression (30, 35) présentent à chaque fois une denture (33, 34, 47, 48) en liaison fonctionnelle mutuelle, les arêtes de commande étant des faces (43, 44) s'étendant axialement en biais et les dentures (33, 34, 47, 48) ayant des faces triangulaires en section transversale, l'arête de commande de la douille de sélection pouvant venir en prise dans des rainures s'étendant axialement (49) entre les arêtes de commande (31a, 31b) du boîtier (24, 36) et la longueur axiale des arêtes de commande (31a, 31b) du boîtier (24, 36) ayant en alternance une première et une deuxième valeur (L1, L2).

6. Dispositif de débrayage selon la revendication 1, **caractérisé en ce que** le déplacement axial de la douille de sélection (29, 40) s'effectue à l'encontre de la force d'un ressort (27).

7. Dispositif de débrayage selon l'une quelconque des revendications précédentes, **caractérisé en ce que** la butée de fin de course (13) comprend une douille de pression (35), une douille d'arête de commande (39) et une douille de sélection (40), qui sont disposées ensemble dans un boîtier (36), la douille de sélection (40), en cas de déplacement axial à travers la douille de pression (35), étant déplaçable dans au moins une première position de rotation jusque dans la position de butée avant (X) et dans au moins une deuxième position de rotation jusque dans la position de butée arrière (Y), et la douille d'arête de commande (39) étant disposée de manière déplaçable axialement à l'encontre de la force d'un ressort (37).

8. Dispositif de débrayage selon la revendication 7, **caractérisé en ce que** la douille de sélection (40) et la douille d'arête de commande (39) présentent au moins à chaque fois une arête de commande en liaison fonctionnelle mutuelle, et la douille de sélection et la douille de pression présentent à chaque fois une denture (47, 48) en liaison fonctionnelle mutuelle, les arêtes de commande étant des faces s'étendant axialement en biais et les dentures (47, 48) ayant des faces triangulaires en section transversale, l'arête de commande (31a, 31b) de la douille de sélection (40) pouvant venir en prise dans des rainures s'étendant axialement entre les arêtes de commande de la douille d'arête de commande (39) et la longueur axiale (L1, L2) des arêtes de commande (31a, 31b) de la douille d'arête de commande (39) ayant en alternance une première et une deuxième valeur.

9. Dispositif de débrayage selon la revendication 7 ou 8, **caractérisé en ce que** le déplacement de la douille de sélection (40) a lieu à l'encontre de la force d'un premier ressort (38) et le déplacement de la douille d'arête de commande (39) a lieu à l'encontre de la force d'un deuxième ressort (37).

10. Dispositif de débrayage selon la revendication 9, **caractérisé en ce que** la constante de ressort du deuxième ressort (37) est supérieure à la constante de ressort du premier ressort (38).
